# EUROPÄISCHE PATENTSCHRIFT

(11) **EP 0 497 167 B1**
(45) Veröffentlichungstag und Bekanntmachung des Hinweises auf die Patenterteilung: **05.07.1995**
(21) Anmeldenummer: 92100783.7
(22) Anmeldetag: 18.01.1992
(51) Int. Cl.: A01C 17/00

(54) **Wurfelemente für einen Schleuderdüngerstreuer**
Throwing elements for a broadcaster
Eléments projetants pour un épandeur centrifuge

(30) Priorität: 31.01.1991 DE 4102782
(43) Veröffentlichungstag der Anmeldung: 05.08.1992
(73) Patentinhaber: Amazonen-Werke H. Dreyer GmbH & Co. KG, D-49205 Hasbergen (DE)
(72) Erfinder: Dreyer, Heinz Dr., Dipl.-Ing., W-4507 Hasbergen (DE)

(56) Entgegenhaltungen:
- CH-A- 507 780
- DE-A- 3 341 703
- DE-U- 8 709 321
- GB-A- 1 222 126

## Beschreibung

Die Erfindung betrifft Wurfelemente für einen Schleuderdüngerstreuer gemäß des Oberbegriffes des Patentanspruches.

Durch die deutsche Offenlegungsschrift 33 41 703 sind bereits derartige Wurfelemente bekannt. Bei den immer größer werdenden Arbeitsbreiten von bisher 24 auf jetzt 36 m und mehr wird das Problem des Verschleißes an den Leitflächen immer größer. Es hat sich nun gezeigt, daß es nicht ausreichend ist, nur die senkrechten und unteren horizontalen Leitflächen mit einem verschleißfesten Material zu versehen, sondern das es auch sinnvoll ist, die winkelverschwenkbaren Leitflächen oder in einem Winkel zu den inneren Leitflächen angestellten Leitflächen mit diesem verschließfesten Material zu versehen.

Der Erfindung liegt die Aufgabe zugrunde, hier Abhilfe zu schaffen.

Diese Aufgabe wird erfindungsgemäß durch die kennzeichnenden Merkmale des Anspruches gelöst. Infolge dieser Maßnahme wird auch bei größten Arbeitsbreiten eine sehr lange Standzeit erreicht.

Weiterhin kann nach der Erfindung vorgesehen sein, in dem Bereich, in dem die winkelverschwenkbare Leitfläche angeordnet ist, auch über den gesamten verschwenkbaren Bereich der horizontalen Leitfläche an der senkrechten Leitfläche ebenfalls das verschleißfeste Material vorzusehen.

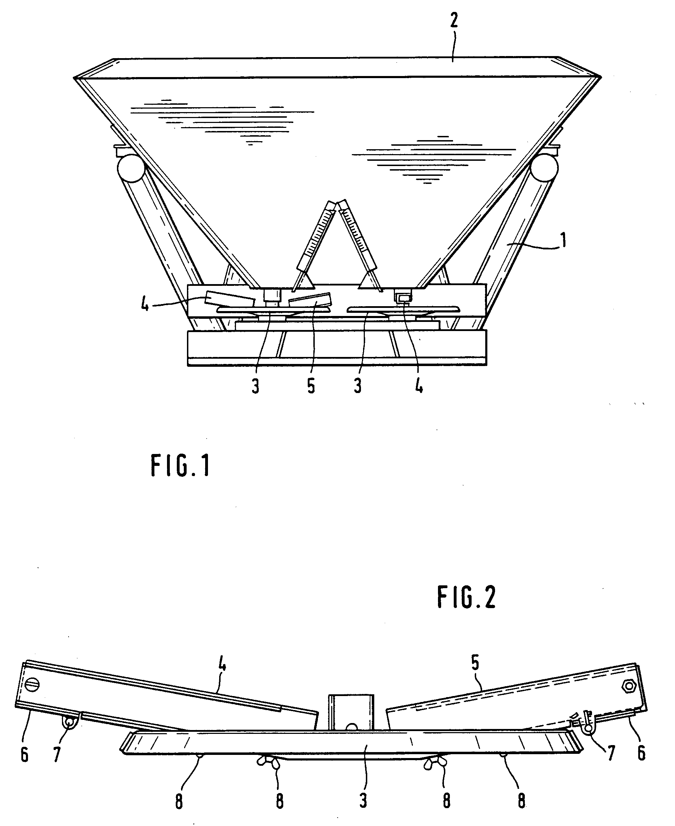

Weitere Einzelheiten der Erfindung sind den übrigen Ansprüchen, der Beispielsbeschreibung und den Zeichnungen zu entnehmen. Hiebei zeigen
- Fig. 1: einen Schleuderdüngerstreuer in der Ansicht von hinten,
- Fig. 2: die Anordnung der Wurfschaufeln auf einer Schleuderscheibe,
- Fig. 3: die Anordnung des verschleißfesten Materiales an einer Wurfschaufel mit winkelverschwenkbarer horizontaler Leitflächen abschnitsweise und in vergrößerter Darstellung,
- Fig. 4: die Wurfschaufel in der Ansicht IV - IV,
- Fig. 5: die Wurfschaufel gemäß Fig. 3, jedoch mit nach oben verschwenkter äußerer Leitfläche,
- Fig. 6: eine weitere Wurfschaufel in vergrößerter Darstellung entsprechend der Darstellungsweise in Fig. 3.

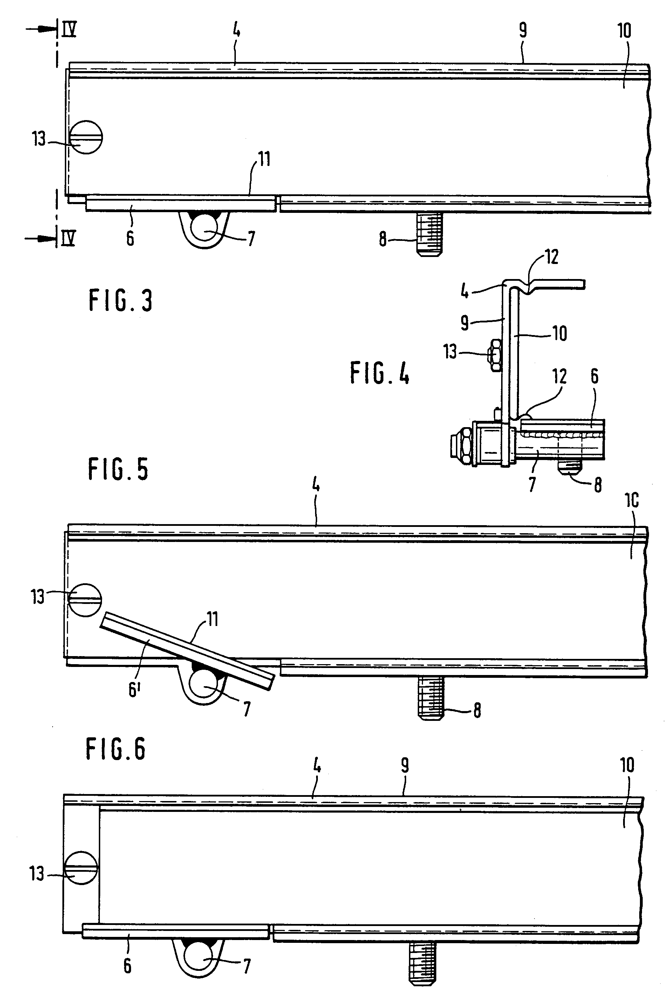

Der Schleuderdüngerstreuer weist den Rahmen 1, den Vorratsbehälter 2 und die unter dem Vorratsbehälter angeordneten Schleuderscheiben 3 auf. Auf den Schleuderscheiben 3 sind jeweils die Wurfelemente 4 und 5 unterschiedlicher Länge angeordnet. Mittels der Wurfelemente 4 und 5 wird der sich im Vorratsbehälter 2 befindliche Dünger über einen Streubereich abgeschleudert. Die Wurfelemente 4 und 5 weisen an ihren äußeren Enden die unteren horizontalen und winkelverschwenkbaren Leitflächen 6 auf. Die Leitflächen 6 sind um die durch den Bolzen 7 verlaufende Schwenkachse aus der in Fig. 3 dargestellten Position in die in Fig. 5 dargestellte Position 6' verschwenkbar. Die Wurfelemente 4 und 5 sind mit Hilfe der Schrauben 8 auf den Schleuderscheiben 3 winkelverschwenkbar und in unterschiedlichen Stellungen zur Radialen einstellbar angeordnet. Die Wurfelemente 4 bzw. 5 bestehen aus der Halterung 9 und den aus verschleißfesten Material bestehenden Auflagen 10 und 11. Die Auflage 10 ist hinter die Rillen 12 eingeklipst und somit vor der aufrechten Leitfläche der Wurfschaufel 4 angeordnet. Mittels der Schrauben 13 ist die Auflage 10 in radialer Richtung gesichert, so daß sie sicher gehalten ist. Die Auflage 11 ist auf der winkelverschwenkbaren Leitfläche 6 aufgeklebt. Die Auflage 10 ist im Bereich der winkelverschwenkbaren Leitflächen 6 derart ausgebildet, daß sie auch in der für die Normaldüngung vorgesehenen Position (Fig. 3) die gesamte hintere Leitfläche der Wurfschaufel 4 insbesondere auch am äußeren Ende schützt.

Die äußere winkelverschwenkbare Leitfläche 6 bewegt sich mit ihrer verschleißfesten Auflage 11 fugenlos vor der aufrechten verschleißfesten Platte 10 im äußeren Bereich. Somit ist also in dem Bereich, in dem der größte Verschleiß auftritt, eine einfache Verschleißreduzierung, auch bei winkelverschwenkbarer Leitfläche 6 gegeben.

Gemäß dem Ausführungsbeispiel nach Fig. 6 endet die verschleißfeste Auflage 10 in einem kurzen Abstand vor dem Ende der Halterungen 9. Hier durchsetzt die Schraube 13 nicht die Auflage 10 sondern ist vor ihrem Ende angeordnet und bildet so einen Anschlag.

## Patentansprüche

1. Wurfelemente (4,5) für einen Schleuderdüngerstreuer, wobei die Wurfelemente (4,5) auf einen um eine etwa vertikale Achse rotierend angetriebene Schleuderscheibe (3) angeordnet sind und die auszubringenden Materialpartikel über einen Streubereich abschleudern, wobei die Wurfelemente (4,5) zumindest an ihren äußeren Enden etwa horizontale Leitflächen aufweisen, die die abzuschleudernden Materialpartikel gegenüber der Horizontalen ablenken, wobei die Leitflächen an Halterungen (9) befestigt und auf ihrer Leitflächenseite mit einem verschleißfesteren Material als die Halterungen (9) versehen sind, dadurch gekennzeichnet, daß der jeweils äußere Teil des Wurfelementes von (4,5) einen um eine horizontale Achse winkelverschwenkbare Leitfläche (6) gebildet wird, die mittels eines zur Längsausrichtung des Wurfelementes (4,5) quer verlaufenten Bolzens (7) an dem Wurfelement (4,5) befestigt ist, und daß die winkelverschwenkbare Leitfläche (6) zumindest auf ihrer horizontalen Leitflächenseite (11) ein verschleißfesteres Material als die Halterung der Leitfläche (6) aufweist.

## Claims

1. Throwing elements (4, 5) for a centrifugal fertiliser broadcaster, the throwing elements (4, 5) being disposed on a centrifugal disc (3), which is driven so as to rotate about a substantially vertical axis, and centrifuging the particles of material to be distributed over a broadcasting region, the throwing elements (4, 5) having, at least at their external ends, substantially horizontal guide faces which deflect the particles of material to be centrifuged relative to the horizontal, the guide faces being mounted on mounting supports (9) and being provided on their guide face side with a material which is more wear-resistant than the mounting supports (9), characterised in that each respective external portion of the throwing element (4, 5) is formed from a guide face (6), which is angularly pivotable about a horizontal axis and is mounted on the throwing element (4, 5) by means of a bolt (7), which extends transversely relative to the longitudinal orientation of the throwing element (4, 5), and in that the angularly pivotable guide face (6) has, at least on its horizontal guide face side (11), a material which is more wear-resistant than the mounting support for the guide face (6).

## Revendications

1. Eléments d'éjection (4, 5) pour un épandeur centrifuge d'engrais, ces éléments d'éjection (4, 5) étant montés sur un disque d'épandage (3), entraîné en rotation autour d'un axe sensiblement vertical et les particules de produit à distribuer sont éjectées dans une zone d'épandage, les éléments éjecteurs (4, 5) ayant au moins au niveau de leur extrémité extérieure des surfaces de guidage sensiblement horizontales qui dévient les particules de produits à éjecter, par rapport à la direction horizontale, les surfaces de guidage étant fixées à des supports (9) et ayant, sur leur côté servant au guidage, une matière résistant à l'usure prévue sur les fixations (9), éléments caractérisé en ce que chaque fois la partie extérieure de l'élément d'éjection (4, 5) est formée par une surface de guidage (6) pivotant angulairement autour d'un axe horizontal, fixé à l'aide d'un goujon (7), sensiblement transversal à la direction longitudinale de l'élément d'éjection (4, 5), sur l'élément d'éjection (4, 5) et en ce que la surface de guidage (6) pivotant angulairement présente au moins sur sa surface de guidage horizontale (11), une matière résistant plus à l'usure que le support de la surface de guidage (6).
